# EUROPÄISCHE PATENTSCHRIFT

(11) **EP 2 567 838 B1**
(45) Veröffentlichungstag und Bekanntmachung des Hinweises auf die Patenterteilung: **15.05.2019**
(21) Anmeldenummer: 12183501.1
(22) Anmeldetag: 07.09.2012
(51) Int. Cl.: B60G 9/00, B60B 35/02, B60B 35/00, B60B 5/02, B60B 35/04

(54) **Nutzfahrzeug-Starrachse**
Commercial vehicle rigid axle
Essieu rigide d'un véhicule utilitaire

(30) Priorität: 12.09.2011 DE 202011105547 U
(43) Veröffentlichungstag der Anmeldung: 13.03.2013
(73) Patentinhaber: BPW Bergische Achsen KG, 51674 Wiehl (DE)
(72) Erfinder: Steffens, Markus, 67722 Winnweiler (DE)
(74) Vertreter: Bungartz Christophersen Partnerschaft mbB Patentanwälte

(56) Entgegenhaltungen:
- EP-A1- 0 243 191
- EP-A1- 1 024 037
- EP-A1- 2 030 815
- WO-A1-97/42046
- WO-A1-98/24645
- GB-A- 2 355 698
- US-A1- 2002 135 225
- US-A1- 2005 057 014
- US-A1- 2007 145 705

## Beschreibung

Die Erfindung betrifft eine Nutzfahrzeug-Starrachse für Anhänger und Trailer nach dem Oberbegriff des Patentanspruchs 1.

Ein wesentliches Merkmal der in Trailern und Anhängern heute vielfach eingesetzten Starrachsen ist die starre Verbindung beider Achsseiten durch ein vergleichsweise steifes Querelement. Durch diese Verbindung wird die Positions- und Winkeländerung eines Rades, wie z. B. beim einseitigen (wechselseitigen) Federn, auch dem anderen Rad nahezu in gleicher Größe aufgezwungen, eingeschlossen Sturz- und Spurwinkeländerungen.

Die Hauptkomponenten heutiger Nutzfahrzeug-Starrachsen für Trailer und Anhänger sind das starre Querelement und die beiden Längslenker, die wiederum starr oder elastisch ausgeführt sein können. An einem Ende ist jeder Längslenker gelenkig an das Fahrzeugchassis angebunden, am anderen Ende ist vielfach ein Luftfederelement angeordnet. An den beiden Enden des Starrachskörpers sind jeweils die Achsschenkel mit den Rädern angeordnet. Bei elastisch ausgeführten Längselementen, beispielsweise in Form von Lenkerfedern, wird die Federung vielfach mittels kombinierter Reihen- und Parallelschaltung der Lenkerfedern mit der Luftfeder gemeinsam übernommen.

Beim wechselseitigen Federn einer Starrachse kommt es zu einer elastischen Verformung aller Achselemente. Dabei werden insbesondere die beiden Längselemente und das starre Achsquerelement tordiert. Damit einhergehend erhöht sich die Wankfederrate im Vergleich zum gleichseitigen Federn, was zur Wankstabilisierung des Fahrzeuges bei Lastwechseln und bei Kurvenfahrt führt.

Eine Nutzfahrzeug-Starrachse sollte insbesondere folgende Anforderungen erfüllen:
- höchste Belastbarkeit
- präzise Radführung
- hohe Wankstabilisierung
- hohe Dämpfung
- geringes Gewicht
- Robustheit, Langlebigkeit
- weitgehende Wartungsfreiheit.

Die in den vergangenen Jahren immer mehr aufkommende Forderung nach Ressourcenschonung und Energieeffizienz hat die Anforderungen an die Leichtbaugüte von Starrachsen erhöht. Gerade bei Nutzfahrzeuganhängern und Trailern reduziert ein geringeres Fahrzeuggewicht nicht nur den Kraftstoffverbrauch, sondern ermöglicht auch eine Erhöhung der bezahlten Nutzlast (engl. "Payload"). Damit hat das Gewicht von Starrachsen für Nutzfahrzeuge auch entscheidenden Einfluss auf die Wirtschaftlichkeit.

Hinzu kommt die besondere Bedeutung einer Gewichtsreduktion für die ungefederten Massen von Achsen und Radaufhängungen, da eine geringere Achsmasse eine Erhöhung der für den Komfort relevanten Radeigenfrequenz mit sich bringt. Zudem wird durch ein verringertes Gewicht der reifengefederten Achselemente die zeitliche Schwankung der dynamischen Radlasten verringert, gleichbedeutend mit einer Verbesserung der aktiven Fahrsicherheit und einer Verringerung der Beanspruchung des Straßenbelags einschließlich des Straßenunterbaus.

Die über die Reifen gefederten Massen setzen sich bei Starrachsen aus dem gesamten Achsquerelement sowie jeweils zur Hälfte aus dem Gewicht jener Komponenten zusammen, die das Fahrwerk mit dem Aufbau verbinden. Dies sind im Einzelnen die Längslenker bzw. Federlenker, die Räder, das Querelement, die Blatt- oder Schraubenfedern, die Stoßdämpfer und die Stabilisator-Pendelstützen. Dies verdeutlicht nochmals die besondere Relevanz von Gewichtsreduktionsmaßnahmen bei Nutzfahrzeug-Starrachsen.

Bekannte Nutzfahrzeug-Starrachsen für Anhänger und Trailer sind, insbesondere aufgrund der geforderten Steifigkeit und Robustheit, in differentieller Stahlbauweise ausgeführt. Die einzelnen Metallkomponenten der Starrachse sind über Klemm- und Schweißverbindungen oder Kombinationen daraus gefügt. Dies führt bei den bekannten Achsbauweisen aus Metall zum Nachteil eines sehr hohen Gewichts und erfordert aufwendige Korrosionsschutzmaßnahmen für den Metallwerkstoff.

Weiter von Nachteil bei differentiellen Stahlbauweisen herkömmlicher Nutzfahrzeug-Starrachsen sind die Aufwendungen für die Verbindung der einzelnen Achselemente. So erfordern lösbare Klemmverbindungen zusätzliche und vor dem Lösen zu sichernde Elemente. In sämtlichen Fügestellen, wie Klemm- und Schraubenverbindungen sowie Schweißnähten, können durch Kraftfluss-Inhomogenitäten Beanspruchungsüberhöhungen auftreten.

Eine gattungsgemäße Nutzfahrzeug-Starrachse ist aus der US 2005/0057014 A1 bekannt. In einem aus einem Faserverbundwerkstoff gefertigten Integral-Achskörper sind das Querelement der Nutzfahrzeug-Starrachse und deren beide Längselemente zu einer Einheit zusammengefasst. Der Integral-Achskörper umfasst beiderseitig integrierte Luftfederschenkel, beiderseitig integrierte Hauptlager und einen integrierten Versteifungsbereich.

Das Dokument GB 2 355 698 A offenbart eine andere Nutzfahrzeug-Starrachse.

Es ist die Aufgabe der Erfindung, die Nachteile der bekannten Nutzfahrzeug-Starrachsen für Anhänger und Trailer in metallischer Bauweise durch eine innovative, faserverstärkte Kunststoff-Leichtbauweise mit herausragender Leichtbaugüte sowie hoher Robustheit und ausgezeichnetem Korrosionsverhalten zu überwinden. Die Starrachse soll sich durch eine hohe Funktionsintegration (Integralbauweise) und eine wirtschaftliche Fertigung mit geringstmöglicher Nacharbeit auszeichnen. Montage und Wartung sollen zur Reduzierung von Wartungs- und Betriebskosten vereinfacht werden.

Diese Aufgabe wird durch eine Nutzfahrzeug-Starrachse mit den Merkmalen des Patentanspruchs 1 gelöst. Bei einer solchen Nutzfahrzeug-Starrachse sind Bestandteile des Integral-Achskörpers beiderseitig integrierte Achsschenkel mit Lagerzapfen.

Vorteilhafte Aus- und Weiterbildungen sind Gegenstand der abhängigen Ansprüche.

Die vorgeschlagene Nutzfahrzeug-Starrachse aus Hochleistungs-Verbundwerkstoff ist als Integralbauteil aus kontinuierlich faserverstärktem Kunststoff ausgeführt. Die Verstärkungsstruktur ist dabei vorzugsweise aus maßgeschneiderten, flächigen Faserhalbzeug-Gebilden (Faservorformlingen) gefertigt, die vorzugsweise mittels Harzinjektionstechnik, wie beispielsweise dem engl. "Resin Transfer Molding (RTM)", mit einem Kunststoff imprägniert werden.

Der Grundgedanke der Erfindung ist eine Faserverbund-Integralbauweise, welche das Achselement und beide Achslängselemente zu einem Integral-Achskörper mit definierter Nachgiebigkeit zusammenführt. Der einteilige Integralachskörper weist als erste Substruktur ein vergleichsweise biege- und torsionssteifes Querelement auf, an das sich als weitere Substruktur auf jeder Seite ein vergleichsweise biege- und torstionssteifes Längselement anschließt.

Die Längselemente integrieren jeweils an einem Ende die Aufnahme des Hauptlagers für den Lagerbock und an dem anderen Ende des Längselements die Anbindung der Luftfeder. Zudem sind die beiden Längselement-Substrukturen und die Querelement-Substruktur über wenigstens ein für Torsionslasten kraftflussgerecht in X-Form ausgeführtes, voll integriertes Versteifungselement miteinander verbunden.

Alle wesentlichen Krafteinleitungselemente, wie beispielsweise Achsschenkel mit Lagerzapfen, Luftfederbalg-Anbindung, Hauptlager und Bremsträger werden als vorgefertigte metallische Einlegeteile in die Achsbauweise form- und/oder kraftschlüssig schon im Entstehungsprozess der Faserverbundstruktur integriert.

Die erfindungsgemäß gewählte Materialgruppe der kontinuierlich faserverstärkten Kunststoffe mit definierter Faserorientierung zeichnet sich durch eine überragend hohe gewichtsspezifische Steifigkeit und Festigkeit sowie durch faktische Korrosionsfreiheit aus. Die vorzugsweise gewählte Fertigungsmethode der Harzinjektionstechnik, aber auch die alternativ mögliche Faserwickeltechnik ermöglichen eine äußerst wirtschaftliche und in großen Teilen automatisierbare Fertigung mit geringem bis sehr geringem Bedarf an Nacharbeit, einer besonders hohen Designfreiheit und einem hohen Integrationspotential von Teilen und Funktionen, hier insbesondere die Zusammenführung des Querelementes mit den beiden Längselementen und dem Versteifungselement.

Gemäß einer vorteilhaften Ausgestaltung der Erfindung ist der Integral-Achskörper in Doppel-T-Form ausgeführt, bestehend aus den zwei Längselementen und dem Querelement.

Ferner wird vorgeschlagen, dass in dem den Integral-Achskörper von zwei gegenüberliegenden Schenkeln der Längselemente und dem Querelement bildenden U ein X-förmig ausgebildetes Versteifungselement mit Aussparungen vollständig integriert ist. Die Aussparungen sind vorzugsweise für eine Torsionsbelastung kraftflussgerecht gestaltet.

Hinsichtlich des Querschnitts des Integral-Achskörpers sieht eine erste Ausgestaltung durchgängig einen Rechteck-Querschnitt vor. Eine zweite Ausgestaltung sieht vor, dass der Integral-Achskörper wenigstens in Teilen einen Kreisquerschnitt aufweist.

Gemäß einer weiteren Ausgestaltung ist der Integral-Achskörper im Bereich der Luftfederschenkel gegenüber seiner übrigen Oberseite abgesenkt, um Bauraum für Luftfedern zu schaffen. Die Absenkung kann z. B. die Form einer Kröpfung sein.

Gemäß einer weiteren Ausgestaltung ist das Versteifungselement mit gewichtsreduzierenden Aussparungen versehen. Die Aussparungen können von im Wesentlichen jeweils dreieckigem Querschnitt sein.

Gemäß einer weiteren Ausgestaltung sind das Querelement und die mit Lagerzapfen versehenen Achsschenkel auf einer gemeinsamen Achse, also zueinander gleichachsig, angeordnet.

Gemäß einer weiteren Ausgestaltung bilden das Querelement und das Versteifungselement des Integral-Achskörpers wenigstens an ihrer Oberseite eine ebene, durchgängige Fläche bzw. Oberfläche.

Gemäß einer weiteren Ausgestaltung besteht die Faserverstärkung des Integral-Achskörpers vollständig oder in Teilen aus Glasfasern.

Gemäß einer weiteren Ausgestaltung besteht die Faserverstärkung des Integral-Achskörpers vollständig oder in Teilen aus Kohlenstofffasern.

Gemäß einer weiteren Ausgestaltung besteht die Faserverstärkung des Integral-Achskörpers zumindest in Teilen aus Aramidfasern.

Gemäß einer ersten erfindungsgemäßen Alternative ist der Integral-Achskörper in Harzinjektionstechnik hergestellt.

Gemäß einer zweiten erfindungsgemäßen Alternative ist der Integral-Achskörper in Faserwickeltechnik hergestellt.

Erfindungsgemäß weisen die metallischen Krafteinleitungselemente der Nutzfahrzeug-Starrachse zwecks ihrer Verbindung mit dem Faserverbundwerkstoff jeweils eine fest verankerte Anordnung von senkrecht auf der Oberfläche stehenden, nadel- oder stiftartigen Strukturen auf. Diese Strukturen dringen in die Faserverstärkung ein, vorzugsweise in Laminat-Dickenrichtung, wodurch sich die nadel- oder stiftartigen Strukturen und die Faserverstärkung ineinander verhaken und es durch die Verbindung der Faserverstärkung mit dem Kunststoff zu einer dauerfesten und schadenstoleranten, formschlüssigen Verbindung kommt.

Gemäß einer weiteren Ausgestaltung ist der Integral-Achskörper eine vollständig oder in Teilen monolithische Hohlkonstruktion, also ohne eine tragende Stützkern-Struktur.

Gemäß einer weiteren Ausgestaltung ist der Integral-Achskörper vollständig oder in Teilen als Sandwich-Konstruktion ausgeführt, also mit einer im Inneren tragenden Stützkern-Struktur.

Gemäß einer weiteren Ausgestaltung werden die noch unimprägnierten Faserhalbzeuge bereits vor dem Injektionsprozess als ein dem späteren Integral-Achskörper geometrisch nahe kommender Faservorformling ausgeführt, in welchem die metallischen Krafteinleitungselemente der Nutzfahrzeug-Starrachse vormontiert werden.

Vorzugsweise sind die Fasern des Integral-Achskörpers so maßgeschneidert ausgerichtet, dass der Integral-Achskörper unabhängig voneinander eine definierte Torsions- und Biegesteifigkeit erzielt.

Hinsichtlich des Sandwich-Kernwerkstoffs wird vorgeschlagen, dass dieser als Wabenstruktur ausgeführt ist. Alternativ kann der Sandwich-Kernwerkstoff ein polymerer Strukturschaum sein.

Ferner wird vorgeschlagen, dass der Sandwich-Kernwerkstoff aus einem nachwachsenden Rohstoff besteht. Ein bevorzugter Werkstoff ist z. B. Balsaholz.

Gemäß einer weiteren Ausgestaltung sind Teile oder die gesamte Oberfläche des Integral-Achskörpers mit einer elastischen Schutzschicht versehen. Durch die Anordnung dieser Schutzschicht lassen sich Impact-Schäden vermeiden.

Gemäß einer weiteren Ausgestaltung ist ein Bremsträger, also das einen Bremssattel einer Scheibenbremse tragende Bauteil, als Metallbauteil über eine Schweiß-, Klemm oder Schraubverbindung an den den Lagerzapfen aufweisenden metallischen Achsschenkel integriert.

Die Erfindung, weitere Vorteile und zusätzliche Details werden im Folgenden anhand eines Ausführungsbeispiels näher beschrieben. Es zeigen:
- Fig. 1: eine Ansicht von schräg oben der Nutzfahrzeug-Starrachse in Faserverbund-Integralbauweise einschließlich Anbauteilen, wie Rädern, Luftfederung und Lagerböcken;
- Fig. 2: eine Ansicht von schräg oben der Nutzfahrzeug-Starrachse in Faserverbund-Integralbauweise ohne Anbauteile;
- Fig. 3: eine Ansicht von schräg unten der Nutzfahrzeug-Starrachse in Faserverbund-Integralbauweise ohne Anbauteile;
- Fig. 4: eine Ansicht von unten der Nutzfahrzeug-Starrachse und
- Fig. 5: eine Ansicht von der Seite der Nutzfahrzeug-Starrachse.

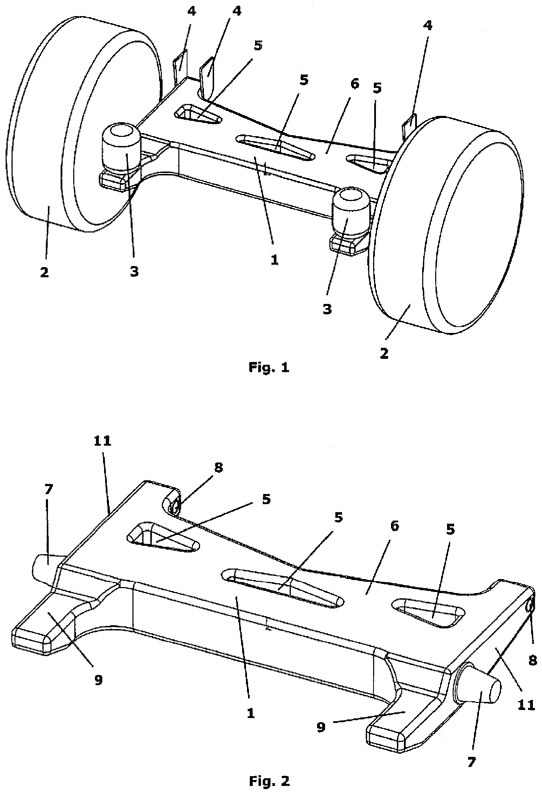

Fig. 1 zeigt die Nutzfahrzeug-Starrachse in Faserverbund-Integralbauweise mit Anbauteilen, bestehend aus einem aus einem Hochleistungs-Faserverbundwerkstoff bestehenden, zentralen Integral-Achskörper in Doppel-T-Form 1 mit kraftflussgerechten Aussparungen 5 und einem am Hauptachskörper auf einer Seite anschließenden und speziell für Torsionslasten in X-Form kraftflussgerecht ausgebildeten Versteifungsbereich 6 sowie den Anbauteilen Räder 2, Luftfederungen 3 und Lagerböcken 4.

Fig. 2 zeigt die Nutzfahrzeug-Starrachse aus Hochleistungs-Faserverbundwerkstoff ohne die Anbauteile, bestehend aus dem die beiden Längselemente 11 und das Querelement 10 zusammenfassenden Integral-Achskörper in Doppel-T-Form 1 mit kraftflussgerecht und gewichtsreduzierend ausgeführten Aussparungen 5, mit den beiderseitig integrierten metallischen Achsschenkeln mit Lagerzapfen 7, den beiderseitig integrierten metallischen Hauptlagern 8, den beiderseitig integrierten Luftfeder-Auflageschenkeln 9 sowie dem am Hauptachskörper 1 auf einer Seite anschließenden und speziell für Torsionslasten in X-Form kraftflussgerecht ausgebildeten Versteifungsbereich 6.

Die abgebildete typische Ausführung des Integral-Achskörpers 1 zeigt eine Oberseite auf einem Höhenniveau mit dem Versteifungsbereich 6. Lediglich die Luftfeder-Auflageschenkel 9 sind gegenüber dem Hauptachskörper 1 in Form einer Kröpfung abgesenkt. Auf diese Weise wird Bauraum für das darauf jeweils angeordnete Luftfederelement geschaffen.

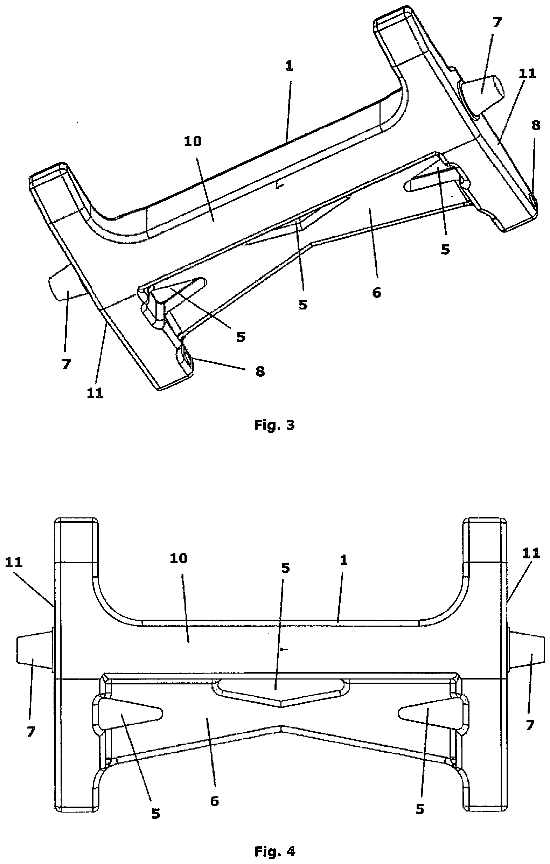

Auch Fig. 3 zeigt die aus einem Hochleistungs-Faserverbundwerkstoff betehende Nutzfahrzeug-Starrachse in Faserverbund-Integralbauweise ohne Anbauteile, bestehend aus dem die beiden Längselemente 11 und das Querelement 10 zusammenfassenden Integral-Achskörper in Doppel-T-Form 1, mit kraftflussgerecht und gewichtsreduzierend ausgeführten Aussparungen 5, mit den beiderseitig integrierten metallischen Achsschenkeln mit Lagerzapfen 7, den beiderseitig integrierten metallischen Hauptlagern 8, den beiderseitig integrierten Luftfeder-Auflageschenkeln 9 sowie dem am Hauptachskörper 1 auf einer Seite anschließenden und speziell für Torsionslasten in X-Form kraftflussgerecht ausgebildeten Versteifungsbereich 6.

Die als Metall-Einlegeteile integrierten Achsschenkel mit Lagerzapfen 7 sind in einer vorzugsweisen Ausführung genau in der Flucht des balkenartigen Querelements 10 des Integral-Achskörpers 1 ausgeführt.

Auch Fig. 4 zeigt die Nutzfahrzeug-Starrachse in Faserverbund-Integralbauweise, bestehend aus dem die beiden Längselemente 11 und das Querelement 10 zusammenfassenden Integralachskörper in Doppel-T-Form 1 mit kraftflussgerecht und gewichtsreduzierend ausgeführten Aussparungen 5, mit den beiderseitig integrierten metallischen Achsschenkeln mit Lagerzapfen 7 sowie dem am Hauptachskörper 1 auf einer Seite anschließenden und speziell für Torsionslasten in X-Form kraftflussgerecht ausgebildeten Versteifungsbereich 6.

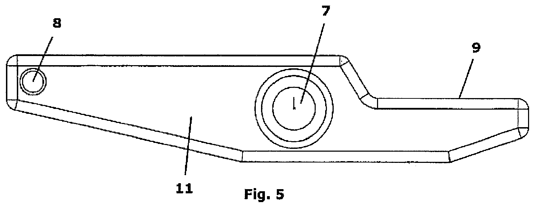

Die Fig. 5 zeigt die Nutzfahrzeug-Starrachse von der Seite ohne Anbauteile, bestehend aus dem zum Integral-Achskörper 1 gehörenden Längselement 11, dem fertigungsseitig integrierten metallischen Achsschenkel mit Lagerzapfen 7, dem fertigungsseitig integrierten metallischen Hauptlager 8 sowie dem Luftfeder-Auflageschenkel 9.

Zusammenfassend besteht die neue Leichtbau-Nutzfahrzeug-Starrachse aus einem vorzugsweise im Harzinjektionsverfahren gefertigten Integral-Achskörper in Hochleistungs-Faserverbund-Bauweise mit für die Wankstabilisierung definierter Nachgiebigkeit, der das Starrachs-Querelement und die beiden Längselemente in einem Doppel-T-förmigen Bauteil zusammenführt. In dem von den zwei gegenüberliegenden Schenkeln der Längselemente und dem Querelement gebildeten U ist ein X-förmig ausgebildetes Versteifungselement mit kraftflussgerecht gestalteten Aussparungen integriert. Alle wesentlichen metallischen Krafteinleitungselemente sind kraft- und/oder formschlüssig bereits in der Entstehungsphase der Faserverbundstruktur durch eine der Harzinjektion vorangehende Montage kraft- und/oder Formschlüssig fest integriert.

Insgesamt werden erhebliche Kosten-, Gewichts- und Korrosionsvorteile bei verbesserter Funktionalität und Leistung gegenüber konventionellen Nutzfahrzeugachsen für Trailer und Anhänger in Metallbauweise erzielt.

### Bezugszeichenliste

- 1: Integral-Achskörper
- 2: Rad
- 3: Luftfederung
- 4: Lagerbock
- 5: Aussparung
- 6: Versteifungselement, Versteifungsbereich
- 7: Lagerzapfen
- 8: Hauptlager
- 9: Auflageschenkel
- 10: Querelement
- 11: Längselement

## Patentansprüche

1. Nutzfahrzeug-Starrachse für Anhänger und Trailer aus einem Faserverbundwerkstoff in Form eines die beiden Längselemente (11) und das Querelement (10) der Nutzfahrzeugachse zusammenfassenden Integral-Achskörpers (1), bestehend aus einem beiderseitig integrierten Luftfederschenkel (9), beiderseitig integrierten Hauptlagern (8) und beiderseitig integrierten Achsschenkeln mit Lagerzapfen (7), sowie einem integrierten Versteifungsbereich (6), **dadurch gekennzeichnet, dass** der Integral-Achskörper (1) durchgängig aus einem kontinuierlich faserverstärkten Kunststoff in Harzinjektionstechnik oder in Faserwickeltechnik hergestellt ist, und dass alle wesentlichen Krafteinleitungsteile als vorgefertigte metallische Einlegeteile formschlüssig in die Faserverbundstruktur integriert sind und dazu eine in ihnen fest verankerte Anordnung von senkrecht auf der Oberfläche stehenden nadel- oder stiftartigen Strukturen aufweisen.

2. Nutzfahrzeug-Starrachse nach Anspruch 1, **dadurch gekennzeichnet, dass** der Integral-Achskörper (1) in Doppel-T-Form ausgeführt ist, bestehend aus den zwei Längselementen (11) und dem Querelement (10).

3. Nutzfahrzeug-Starrachse nach Anspruch 1 und 2, **dadurch gekennzeichnet, dass** in dem den Integral-Achskörper (1) von zwei gegenüberliegenden Schenkeln der Längselemente (11) und dem Querelement (10) bildenden U ein X-förmig ausgebildetes Versteifungselement (6) mit Aussparungen (5) vollständig integriert ist, die vorzugsweise für eine Torsionsbelastung kraftflussgerecht gestaltet sind.

4. Nutzfahrzeug-Starrachse nach einem der Ansprüche 1 bis 3, **dadurch gekennzeichnet, dass** der Integral-Achskörper (1) durchgängig einen Rechteck-Querschnitt aufweist.

5. Nutzfahrzeug-Starrachse nach einem der Ansprüche 1 bis 3, **dadurch gekennzeichnet, dass** der Integral-Achskörper (1) wenigstens in Teilen einen Kreisquerschnitt aufweist.

6. Nutzfahrzeug-Starrachse nach einem der vorangehenden Ansprüche, **dadurch gekennzeichnet, dass** der Integral-Achskörper (1) im Bereich der Luftfederschenkel (9) gegenüber seiner übrigen Oberseite abgesenkt ist, um Bauraum für Luftfedern zu schaffen.

7. Nutzfahrzeug-Starrachse nach einem der vorangegangenen Ansprüche, **gekennzeichnet durch** gewichtsreduzierende Aussparungen (5) im Versteifungselement (6) von im Wesentlichen jeweils dreieckigem Querschnitt.

8. Nutzfahrzeug-Starrachse nach einem der vorangehenden Ansprüche, **dadurch gekennzeichnet, dass** das Querelement (10) und die mit Lagerzapfen (7) versehenen Achsschenkel auf einer Achse angeordnet sind.

9. Nutzfahrzeug-Starrachse nach einem der vorangehenden Ansprüche, **dadurch gekennzeichnet, dass** das Querelement (10) und das Versteifungselement (6) des Integral-Achskörpers (1) wenigstens an ihrer Oberseite eine ebene, durchgängige Fläche bilden.

10. Nutzfahrzeug-Starrachse nach einem der Ansprüche 1 bis 9, **dadurch gekennzeichnet, dass** die Faserverstärkung vollständig oder in Teilen aus Glasfasern besteht.

11. Nutzfahrzeug-Starrachse nach einem der Ansprüche 1 bis 9, **dadurch gekennzeichnet, dass** die Faserverstärkung vollständig oder in Teilen aus Kohlenstofffasern besteht.

12. Nutzfahrzeug-Starrachse nach einem der Ansprüche 1 bis 9, **dadurch gekennzeichnet, dass** die Faserverstärkung zumindest in Teilen aus Aramidfasern besteht.

13. Nutzfahrzeug-Starrachse nach einem der Ansprüche 1 bis 12, **dadurch gekennzeichnet, dass** der Integral-Achskörper (1) als vollständig oder in Teilen monolithische Hohlkonstruktion ohne eine tragende Stützkern-Struktur ausgeführt ist.

14. Nutzfahrzeug-Starrachse nach einem der Ansprüche 1 bis 12, **dadurch gekennzeichnet, dass** der Integral-Achskörper (1) vollständig oder in Teilen als Sandwich-Konstruktion mit einer im Inneren des Integral-Achskörpers angeordneten, tragenden Stützkern-Struktur ausgeführt ist.

15. Nutzfahrzeug-Starrachse nach Anspruch 1, **dadurch gekennzeichnet, dass** im Fall der Herstellung durch Harzinjektionstechnik die noch unimprägnierten Faserhalbzeuge bereits vor dem Injektionsprozess als ein dem späteren Integral-Achskörper geometrisch bereits sehr nahe kommender Faservorformling ausgeführt werden, in welchen die metallischen Krafteinleitungselemente vormontiert werden.

16. Nutzfahrzeug-Starrachse nach Anspruch 14, **dadurch gekennzeichnet, dass** der Sandwich-Kernwerkstoff als Wabenstruktur ausgeführt ist.

17. Nutzfahrzeug-Starrachse nach Anspruch 14, **dadurch gekennzeichnet, dass** der Sandwich-Kernwerkstoff ein polymerer Strukturschaum ist.

18. Nutzfahrzeug-Starrachse nach Anspruch 14, **dadurch gekennzeichnet, dass** der Sandwich-Kernwerkstoff aus nachwachsenden Rohstoffen ausgeführt ist, vorzugsweise aus Balsaholz.

19. Nutzfahrzeug-Starrachse nach einem der vorangehenden Ansprüche, **dadurch gekennzeichnet, dass** Teile oder die gesamte Oberfläche des Integral-Achskörpers (1) mit einer elastischen Schutzschicht versehen sind.

20. Nutzfahrzeug-Starrachse nach einem der vorangehenden Ansprüche, **dadurch gekennzeichnet, dass** der Bremsträger einer Scheibenbremse als Metallbauteil über eine Schweiß-, Klemm- oder Schraubverbindung an dem den Lagerzapfen (7) aufweisenden metallischen Achsschenkel integriert ist.

## Claims

1. Commercial vehicle rigid axle for trailers and towed units, made from a fibre composite in the form of an integral axle body (1) combining the two longitudinal elements (11) and the transverse element (10) of the commercial vehicle axle and consisting of an air spring leg (9) integrated on both sides, main bearings (8) integrated on both sides and stub axles which are integrated on both sides and have bearing journals (7), and an integrated stiffening region (6), **characterized in that** the integral axle body (1) is produced throughout from a continuously fibre-reinforced plastic by a resin injection technique or by a fibre winding technique, and **in that** all of the essential force introduction parts are integrated as premanufactured metallic inserts into the fibre composite structure in a form-fitting manner and, for this purpose, have an arrangement, fixedly secured therein, of needle- or pin-like structures standing perpendicularly on the surface.

2. Commercial vehicle rigid axle according to Claim 1, **characterized in that** the integral axle body (1) is of I-shaped design, consisting of the two longitudinal elements (11) and the transverse element (10).

3. Commercial vehicle rigid axle according to Claims 1 and 2, **characterized in that** a stiffening element (6) of X-shaped design and having recesses (5) which are preferably configured appropriately for the force flux for a torsional loading are completely integrated in the U forming the integral axle body (1) by two opposite legs of the longitudinal elements (11) and the transverse element (10).

4. Commercial vehicle rigid axle according to one of Claims 1 to 3, **characterized in that** the integral axle body (1) has a rectangular cross section throughout.

5. Commercial vehicle rigid axle according to one of Claims 1 to 3, **characterized in that** the integral axle body (1) has a circular cross section at least in parts.

6. Commercial vehicle rigid axle according to one of the preceding claims, **characterized in that** the integral axle body (1) is lowered in the region of the air spring legs (9) in relation to the rest of the upper side thereof, in order to provide construction space for air springs.

7. Commercial vehicle rigid axle according to one of the preceding claims, **characterized by** weight-reducing recesses (5) of substantially in each case triangular cross section in the stiffening element (6) .

8. Commercial vehicle rigid axle according to one of the preceding claims, **characterized in that** the transverse element (10) and the stub axles provided with bearing journals (7) are arranged on an axis.

9. Commercial vehicle rigid axle according to one of the preceding claims, **characterized in that** the transverse element (10) and the stiffening element (6) of the integral axle body (1) form a flat, continuous surface at least on the upper side thereof.

10. Commercial vehicle rigid axle according to one of Claims 1 to 9, **characterized in that** the fibre reinforcement is composed completely or in parts of glass fibres.

11. Commercial vehicle rigid axle according to one of Claims 1 to 9, **characterized in that** the fibre reinforcement is composed completely or in parts of carbon fibres.

12. Commercial vehicle rigid axle according to one of Claims 1 to 9, **characterized in that** the fibre reinforcement is composed at least in parts of aramid fibres.

13. Commercial vehicle rigid axle according to one of Claims 1 to 12, **characterized in that** the integral axle body (1) is designed as a hollow structure which is monolithic completely or in parts and does not have a load-bearing supporting core structure.

14. Commercial vehicle rigid axle according to one of Claims 1 to 12, **characterized in that** the integral axle body (1) is designed completely or in parts as a sandwich structure with a load-bearing supporting core structure arranged in the interior of the integral axle body.

15. Commercial vehicle rigid axle according to Claim 1, **characterized in that**, in the case of production by a resin injection technique, the still unimpregnated fibre semi-finished products are formed even before the injection process as a fibre preform which already very closely resembles the subsequent integral axle body geometrically and in which the metallic force introduction elements are preas sembled.

16. Commercial vehicle rigid axle according to Claim 14, **characterized in that** the sandwich core material is designed as a honeycomb structure.

17. Commercial vehicle rigid axle according to Claim 14, **characterized in that** the sandwich core material is a polymeric structural foam.

18. Commercial vehicle rigid axle according to Claim 14, **characterized in that** the sandwich core material is formed from renewable raw materials, preferably from balsa wood.

19. Commercial vehicle rigid axle according to one of the preceding claims, **characterized in that** parts or the entire surface of the integral axle body (1) are/is provided with an elastic protective layer.

20. Commercial vehicle rigid axle according to one of the preceding claims, **characterized in that** the brake carrier of a disc brake as a metal component is integrated via a welded, clamping or screw connection on the metallic stub axle having the bearing journal (7).

## Revendications

1. Essieu rigide de véhicule utilitaire pour remorques et semi-remorques, constitué d'un matériau composite renforcé par des fibres sous la forme d'un corps d'essieu d'un seul tenant (1) réunissant les deux éléments longitudinaux (11) et l'élément transversal (10) de l'essieu de véhicule utilitaire, lequel corps d'essieu est constitué d'une branche de ressort pneumatique (9) intégrée des deux côtés, de paliers principaux (8) intégrés des deux côtés et de fusées d'essieu intégrées des deux côtés et dotées de tourillons de palier (7), ainsi que d'une zone de raidissement intégrée (6), **caractérisé en ce que** le corps d'essieu d'un seul tenant (1) est fabriqué à partir d'une matière synthétique renforcée par des fibres de manière continue par une technique d'injection de résine ou par une technique d'enroulement de fibres, et **en ce que** toutes les pièces principales d'application de force sont intégrées, en tant que pièces d'insertion métalliques préfabriquées, par complémentarité de forme dans la structure composite renforcée par des fibres, et comprennent à cet effet un agencement, ancré solidement dans celles-ci, de structures en forme d'aiguilles ou de goupilles dressées perpendiculairement sur la surface.

2. Essieu rigide de véhicule utilitaire selon la revendication 1, **caractérisé en ce que** le corps d'essieu d'un seul tenant (1) est réalisé en forme de double T, constitué des deux éléments longitudinaux (11) et de l'élément transversal (10).

3. Essieu rigide de véhicule utilitaire selon les revendications 1 et 2, **caractérisé en ce qu'**un élément de raidissement (6) réalisé en forme de X et doté d'évidements (5) est intégré complètement dans le U formant le corps d'essieu d'un seul tenant (1) par les deux branches opposées des éléments longitudinaux (11) et l'élément transversal (10), lesquels évidement sont configurés de manière adaptée au flux de force de préférence pour une sollicitation de torsion.

4. Essieu rigide de véhicule utilitaire selon l'une des revendications 1 à 3, **caractérisé en ce que** le corps d'essieu d'un seul tenant (1) présente, de manière continue, une section transversale rectangulaire.

5. Essieu rigide de véhicule utilitaire selon l'une des revendications 1 à 3, **caractérisé en ce que** le corps d'essieu d'un seul tenant (1) présente, au moins dans certaines parties, une section transversale circulaire.

6. Essieu rigide de véhicule utilitaire selon l'une des revendications précédentes, **caractérisé en ce que** le corps d'essieu d'un seul tenant (1) est abaissé dans la zone des branches de ressort pneumatique (9) par rapport à son côté supérieur restant, afin de de produire un espace d'installation pour des ressorts pneumatiques.

7. Essieu rigide de véhicule utilitaire selon l'une des revendications précédentes, **caractérisé par** des évidements (5) réduisant le poids dans l'élément de raidissement (6), de section transversale sensiblement triangulaire respectivement.

8. Essieu rigide de véhicule utilitaire selon l'une des revendications précédentes, **caractérisé en ce que** l'élément transversal (10) et les fusées d'essieu dotées de tourillons de palier (7) sont disposés sur un essieu.

9. Essieu rigide de véhicule utilitaire selon l'une des revendications précédentes, **caractérisé en ce que** l'élément transversal (10) et l'élément de raidissement (6) du corps d'essieu d'un seul tenant (1) forment, au moins sur leur côté supérieur, une surface continue plane.

10. Essieu rigide de véhicule utilitaire selon l'une des revendications 1 à 9, **caractérisé en ce que** le renforcement par des fibres est constitué par des fibres de verre complètement ou dans certaines parties.

11. Essieu rigide de véhicule utilitaire selon l'une des revendications 1 à 9, **caractérisé en ce que** le renforcement par des fibres est constitué par des fibres de carbone complètement ou dans certaines parties.

12. Essieu rigide de véhicule utilitaire selon l'une des revendications 1 à 9, **caractérisé en ce que** le renforcement par des fibres est constitué par des fibres d'aramide au moins dans certaines parties.

13. Essieu rigide de véhicule utilitaire selon l'une des revendications 1 à 12, **caractérisé en ce que** le corps d'essieu d'un seul tenant (1) est réalisé sous forme de construction creuse monolithique complètement ou dans certaines parties et dépourvue de structure d'âme de support porteuse.

14. Essieu rigide de véhicule utilitaire selon l'une des revendications 1 à 12, **caractérisé en ce que** le corps d'essieu d'un seul tenant (1) est réalisé, complètement ou dans certaines parties, sous forme de structure en sandwich dotée d'une structure d'âme de support porteuse disposée à l'intérieur du corps d'essieu d'un seul tenant.

15. Essieu rigide de véhicule utilitaire selon la revendication 1, **caractérisé en ce que**, dans le cas de la fabrication par une technique d'injection de résine, les produits semi-finis pas encore imprégnés sont, déjà avant le processus d'injection, réalisés sous forme de préforme en fibres de géométrie déjà très proche de celle du corps d'essieu d'un seul tenant ultérieur, préforme dans laquelle les éléments métalliques d'application de force sont prémontés.

16. Essieu rigide de véhicule utilitaire selon la revendication 14, **caractérisé en ce que** la matière d'âme de sandwich est réalisée sous forme de structure en nid d'abeilles.

17. Essieu rigide de véhicule utilitaire selon la revendication 14, **caractérisé en ce que** la matière d'âme de sandwich est une mousse structurée polymère.

18. Essieu rigide de véhicule utilitaire selon la revendication 14, **caractérisé en ce que** la matière d'âme de sandwich est réalisée à partir de matières premières renouvelables, de préférence à partir de bois de balsa.

19. Essieu rigide de véhicule utilitaire selon l'une des revendications précédentes, **caractérisé en ce que** des parties du corps d'essieu d'un seul tenant (1) ou toute sa surface sont dotées d'une couche protectrice élastique.

20. Essieu rigide de véhicule utilitaire selon l'une des revendications précédentes, **caractérisé en ce que** le support de frein d'un frein à disque est intégré, en tant que composant métallique, à la fusée d'essieu métallique comprenant le tourillon de palier (7) par le biais d'une liaison par soudage, serrage ou vissage.
